# EUROPEAN PATENT APPLICATION

(11) **EP 0 695 703 A1**
(43) Date of publication of application: **07.02.1996**
(21) Application number: 95106435.1
(22) Date of filing: 28.04.1995
(51) Int. Cl.: B65G 47/08

(54) **Apparatus for conveying products in groups**

(30) Priority: 04.08.1994 IT MI941703
(71) Applicant: CAMA 1 SpA, I-20131 Milano (IT)
(72) Inventor: Bellante, Paolo, I-20090 Segrate (Milano) (IT)
(74) Representative: Petruzziello, Aldo

(57) **Abstract**

An apparatus for group conveying of products or packs (P) coming from at least one feed conveyor (1) at the exit from a production line, and directed for example towards cartoning, comprising an endless conveyor (T), consisting of at least two conveyors placed side by side (6, 6'), driven independently by respective motors (7, 7'), on which cells (5, 5') designed to receive the products (P) are fixed in groups (A,A', B, B').

## Description

The object of the present invention is an apparatus for conveying products or packs in groups as they come one after the other from one or more feed conveyors, particularly packaging lines in the foodstuffs sector or in other packing sectors.

Apparatuses of the above type are already known and are mainly utilized for transferring foodstuffs and other products, coming from a wrapping machine for example, to a cartoning station, where these products are taken individually or in groups and put into suitable container boxes or into subsequent grouping and conveyor systems.

As far as possible, these apparatuses must even out the different feed rate or discontinuities of the incoming products, and allow the products to be arranged in small groups for picking up in the final part of the apparatus.

For this purpose apparatuses have been designed in which the products are collected individually in independent seats or pockets, each carried by a trolley which is idly mounted on an endless conveyor.

Such trolleys are operated only when the corresponding pockets have been filled with the product.

The operating means for the trolleys, which are usually idle, consist of purely mechanical means, associated with individual trolleys, such as, for example, friction plates, elastic thrust elements and the like.

Moreover, in order to accumulate and group the products, timer stops are provided that halt the products in certain positions.

All this means that the apparatuses have a very complex structure, but above all the mechanical means provided are subject to wear and therefore to breaking as time goes on.

This is a serious problem, if it is considered that the apparatuses in question are, in most cases, included in foodstuff production lines, such as lines for producing icecream or oven-baked products, hence any downtime of the apparatus, in order to be able to carry out replacement of the damaged part, involves considerable loss of the product which continues to be fed in by the lines upstream.

The aim of the invention is to eliminate the above drawbacks by providing an apparatus for conveying products or packs in groups that is structurally simple, in which the risks of failure due to wear have been reduced to a minimum, if not entirely removed, by eliminating from the construction all the classical mechanical means, such as friction plates, conveyor chains etc., which, besides being subject to wear, also create considerable operational limitations at high and very high speed (essential nowadays to be able to handle the input from the most advanced wrapping machines) because of the weights and thus of inertias that are created during the very rapid translations required.

The aim is achieved, according to the invention, by means of the characteristics listed in the appended claims.

The apparatus according to the invention, in its simplest embodiment, comprises an endless conveyor consisting of at least two conveyors placed side by side, preferably belts, on the back of which groups of fixed cells are provided to receive the individual products arriving from the feed belt, such conveyor belts being independently motorized by means of variable-speed motors and thus being able to move at different speeds as required by the product feeding and picking up cycles.

Further characteristics of the invention will be made clearer by the detailed description given below, which refers to purely exemplary and therefore not restrictive embodiments, illustrated in the appended drawings, in which:
Figure 1 is a diagrammatic top plan view of an apparatus according to the invention;
Figure 2 is a section taken along the line II-II in Figure 1;
Figure 3 is an enlargement of the detail indicated by A in Figure 2;
Figure 4 is a front elevation view of the apparatus in Figure 1;
Figures 5a to 5f are diagrammatic illustrations of the operating cycle of the apparatus;
Figure 6 is a top plan view of an embodiment with two feeding lines;
Figure 7 shows an alternate embodiment of the apparatus according to the invention, in which the products are fed in line with the movement of the conveyors, rather than transversely at 90°;
Figure 8 shows a further alternate embodiment, in which the feed conveyor is disposed at 90° to the conveyors of the apparatus, but upstream from them, and a deflector is provided to allow the products to be introduced continuously into the cells;
Figure 9 is an enlarged section taken along the line IX-IX in Figure 8.
Figure 10 is yet a further alternate embodiment, in which the products are fed to the lower branches of the conveyors.

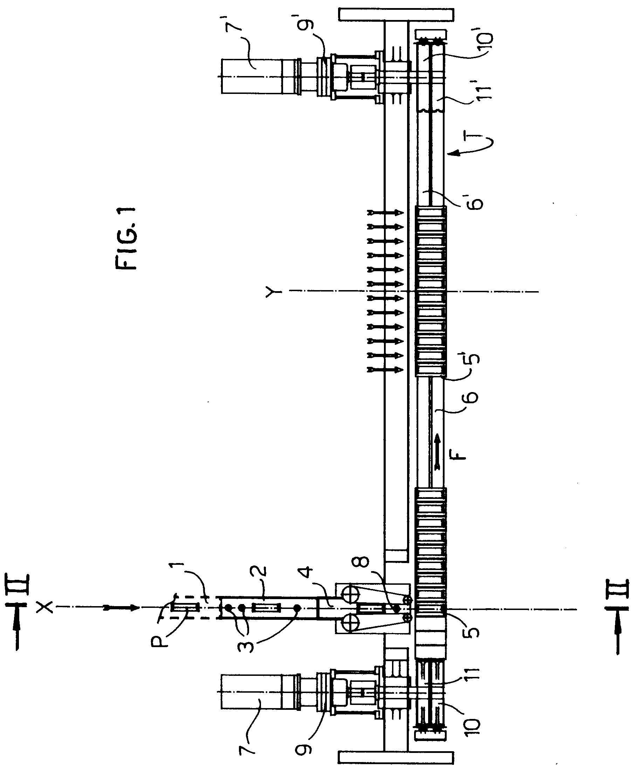

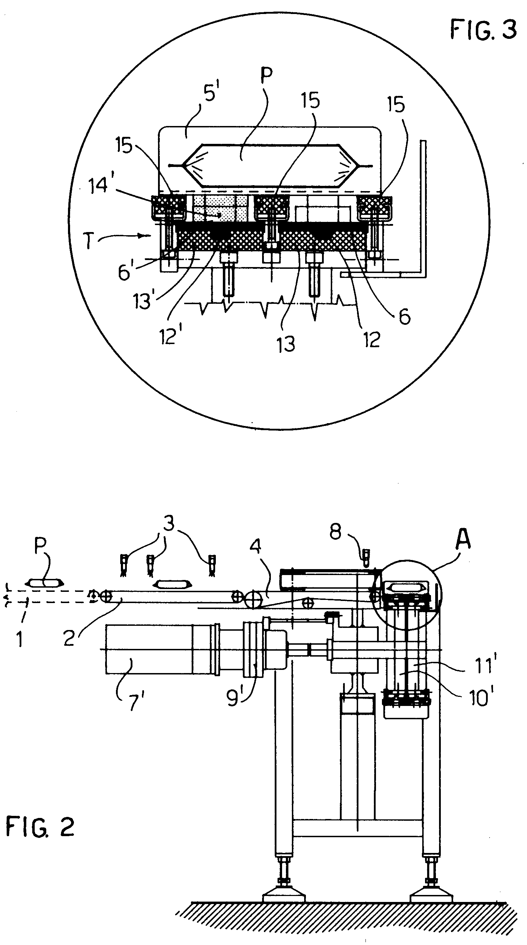

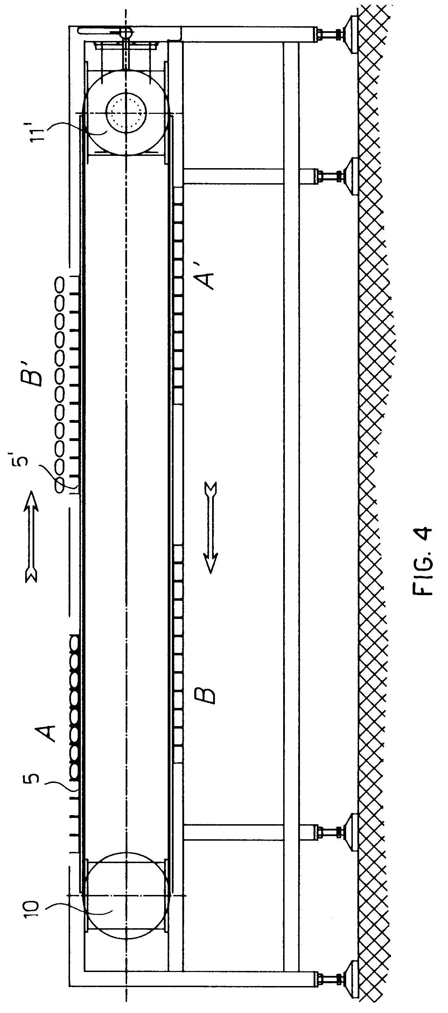

With reference to Figures 1 to 5, and for the moment to Figures 1 and 2 in particular, reference number 1 indicates a feed belt, coming for example from a wrapping machine or production line, from which the products P, which can be unevenly spaced, are transferred onto a first conveyor belt 2, where photoelectric cells 3 are installed which are able to measure the correct distance of the products P, which subsequently reach a second accelerator-inserter belt 4.

A minimum distance between the products is thus guaranteed, this distance being essential for the subsequent insertion of the products into the individual collection cells 5, 5' fixed on endless conveyors that advance in the direction indicated by the arrow F, as will be better described below.

In the exemplary embodiment illustrated, the endless conveyor indicated as a whole by the letter T, comprises two belts 6, 6' placed side by side, driven independently by means of respective motors 7, 7', advantageously variable-speed motors, disposed at the two ends of the apparatus. Each motor 7, 7' transmits the drive, by means of a respective reduction unit 9, 9', to a corresponding toothed pulley 10, 10'. The other pair of toothed pulleys 11, 11', on the other hand, is idle.

The belts 6, 6' are obviously toothed on the inside so that they can be driven by the pulleys 10, 11' and 10', 11, and each has a longitudinal rib 12, 12' on the inside, so that they can be guided by special internal fixed strips 13, 13', each with a longitudinal central groove.

The cells 5, 5' are fixed on the back, i.e. on the external part of the respective belts 6, 6', by means of respective plugs 14, 14' (see Figure 3), and jut out over the other belt, resting on longitudinal guides 15.

The cells 5, 5' are arranged in groups on their respective belts 6, 6' and their number varies according to the type of production and thus the type of grouping desired. In the appended figures, two groups of cells are shown for each belt, indicated respectively by A, A' and B, B', each group consisting of twelve cells.

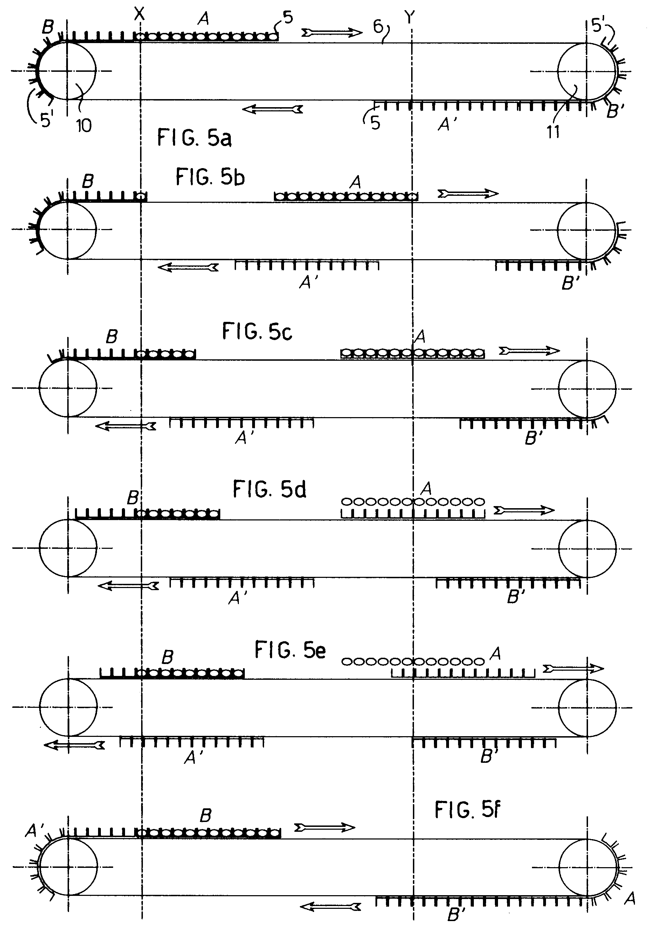

With reference to Figures 5a to 5f, an operating cycle of the machine will now be described.

Each time the product P coming from the feed belt 4 is fed in, one of the two belts 6, 6' moves forward one step (or more), driven by the respective motors 7, 7' upon the consent of a photoelectric cell 8, positioned in the final part of the feed belt 4, that detects the arrival of the product. In the event of failure to feed further products, the corresponding belt is stopped immediately, to prevent cells not containing product from setting off toward the subsequent picking area.

With reference to Figures 5a to 5f, where X and Y indicate the product loading and unloading axes, respectively, the operating principle and the advantages of the apparatus according to the invention can be readily understood.

Assuming that the groups of cells A, A' are carried by the belt 6 and the groups of cells B, B' by the belt 6', Figure 5a illustrates a final stage in the loading of group A of the belt 6, while the products in the group of cells B' of the belt 6' have already been taken out. In this figure it can be noted that the group B of cells on belt 6 is lined up behind the group A, thus preparing for loading.

Figure 5b illustrates the stage in which loading of the group of cells B begins on the belt 6', which is moved intermittently to position a corresponding cell 5' on the loading axis X, while the belt 6 is accelerated to bring the group of cells A level with the unloading axis Y, and at the same time bring the group of cells A' toward the loading zone.

Figure 5c shows an intermediate stage in loading of the group of cells B on the belt 6' and positioning of the group of cells A of the belt 6 level with the unloading station.

Figure 5d shows the stage of taking products from the group of cells A, done by means of sucker, pincer or needle systems or the like, and their possible diversion, either individually or in multiples to feed hoppers, conveyor chains, subsequent grouping and conveying systems, hands, robots, etc., for example for final packaging in boxes, trays, corrugated cardboard cartons, display packs and the like.

As soon as the products have been taken from the group of cells A on the belt 6, the latter will make a further rapid translation (Figures 5e, 5f) bringing its second group of cells A' in line behind the first group of cells B on the belt 6', thus allowing continuity in receiving the products P as they arrive from the feed belt 4. In this situation (Fig. 5f) the first group of cells A on the belt 6 is disposed right behind the second group of cells B' on the belt 6'.

The group of cells B will thus be rapidly evacuated towards the picking-up area and loading of the group of cells A' will begin. The cycle will be repeated continuously, with variations in the speed of the belts 6, 6' driven independently by the respective motors 7, 7', which are synchronized electronically to allow the various accelerations, decelerations, and intermittent movements for the products to be received in the cells and pauses for the groups of products to be picked up.

Using the same inventive concept, other embodiments of the invention are possible.

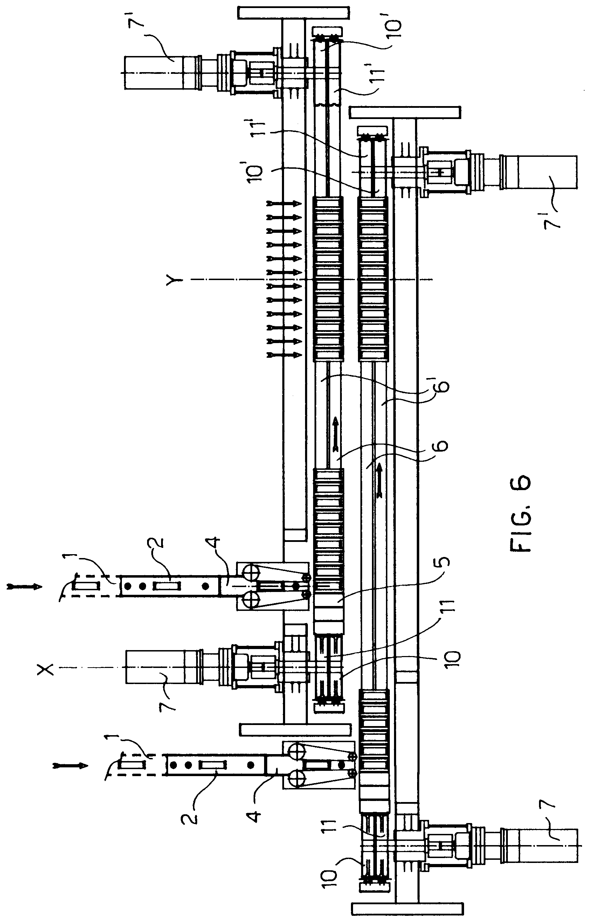

For example, in figure 6 two apparatuses entirely identical to that described with reference to figures 1 to 5 are combined, each supplied by a respective feeding line 1, 2 and 4. In this case, the movements of the belts 6, 6' of each apparatus will be synchronized so as to carry corresponding groups of cells A' A'; B, B' into the same picking up and unloading area, as shown in Figure 6.

It is clear that more than two feeding lines can be foreseen, adding a corresponding number of apparatuses according to the invention.

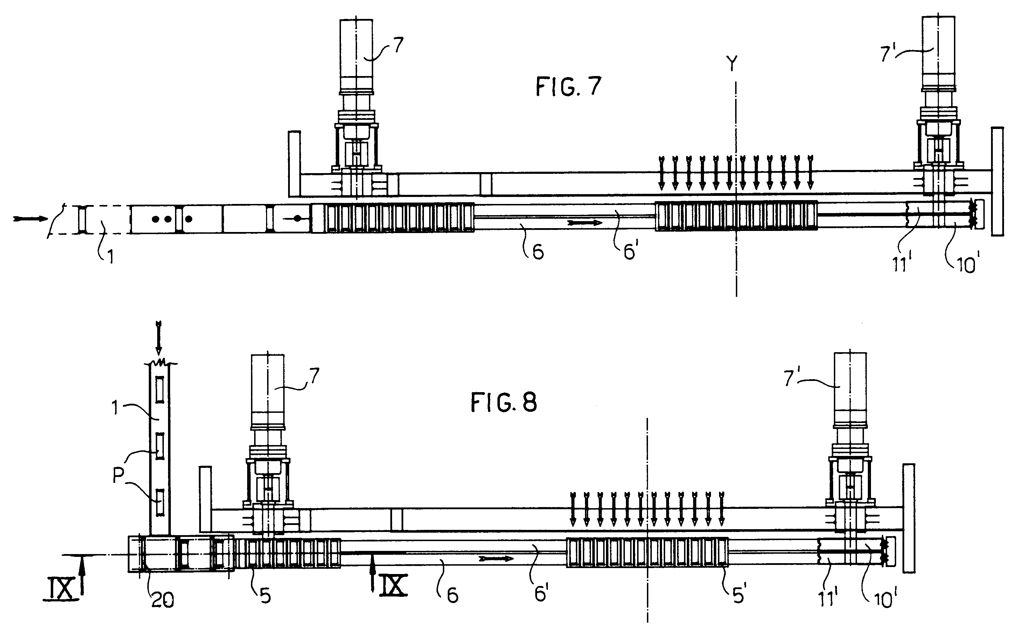

Figure 7 shows an embodiment of the apparatus according to the invention in which the product feed belt 1 is disposed in line with the conveyor T, instead of at 90° to it, as shown in the previous figures.

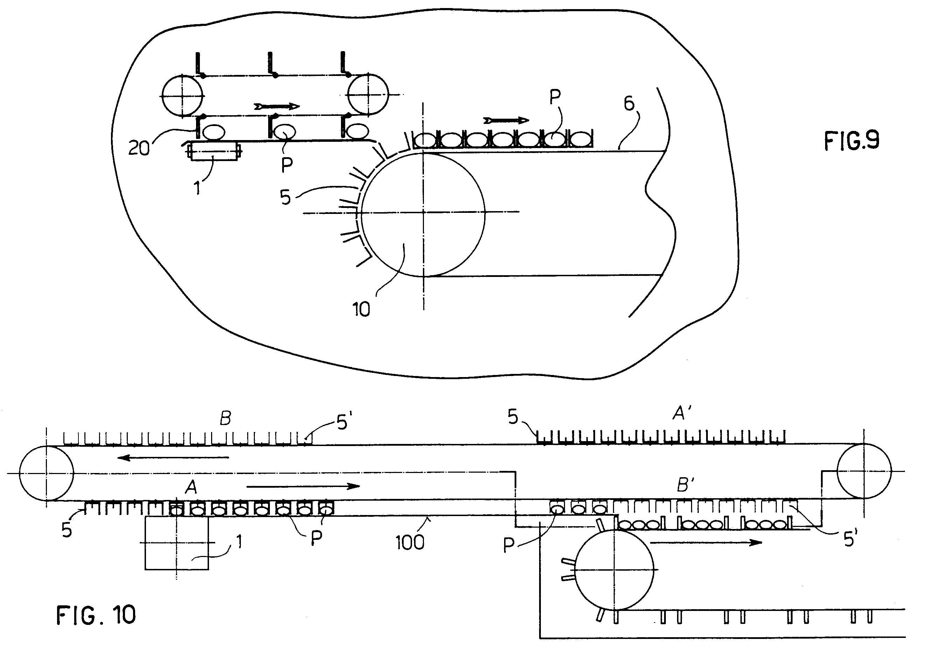

In Figures 8 and 9, on the other hand, an arrangement is illustrated in which a feed conveyor 1 for evenly spaced products P is again provided, disposed transversally at 90° with respect to the conveyor T, but upstream from it and coupled with an upper deflector 20 (Fig. 9), that moves in time with the movement of the belts 6, 6', so as to permit continuous introduction of the products B into the cells 5, 5'.

According to the embodiment in Figure 10, the feed conveyor 1 of the products P is placed below the conveyor T, so that the products are loaded to the lower branches of the belts 6, 6' which, in this case, move forward in a direction contrary to the one of the previous embodiments.

Products P are therefore "covered" from the above by the cells 5, 5' and are moved forward sliding on a lower fixed plane 100 to the unloading station which, in this case, is a further conveyor.

In the preceding description reference has been made to belt conveyors 6, 6', but it is obvious that such conveyors can consist of chains, rolling shutter chains, flexible belts and the like, without departing from the idea of the arrangement of fixing groups of cells 5, 5' on the back of such conveyors, in order to avoid resorting to the mechanical means thus far utilized for conveying and grouping individual cells, normally mounted idly on the conveyor.

## Claims

1. An apparatus for group conveying of products or packs (P), coming from at least one conveyor (1) at the exit from a production line and directed toward cartoning for example, comprising an endless conveyor (T), on which a plurality of cells (5, 5') are provided to receive said products (P), characterized in that said conveyor (T) comprises at least two separately driven conveyors (6, 6') placed side by side, and by the fact that said cells (5, 5') are arranged in groups (A, A') and (B, B'), respectively, on said conveyors (6, 6') so that while one group of cells (A) or (A') of the conveyor (6) is in the product (P) loading stage, the other group (B') or (B) of the conveyor (6') is in the product (P) unloading stage, such groups (A, A'), (B, B') following each other during the work cycle and thus allowing continuity of product feeding.

2. An apparatus according to claim 1 characterized in that said conveyors (6, 6') are belt, chain, roller shutter, flexible belt conveyors or the like.

3. An apparatus according to claim 1 or 2, characterized in that said conveyors (6, 6') are driven independently by respective variable-speed motors (7, 7'), by means of respective reduction units (9, 9') and driving pulleys (10, 10'), with which idle pulleys (11, 11') cooperate.

4. An apparatus according to claim 3, characterized in that said independent motors (7, 7') are electronically synchronized to allow accelerations, decelerations, intermittent movements, and halts of the conveyors.

5. An apparatus according to any one of the previous claims, characterized in that said cells (5, 5') are fixed by means of plugs (14, 14') to the respective conveyors (6, 6') and are mounted to jut out over the other conveyor, resting on longitudinal guides (15).

6. An apparatus according to any one of the previous claims, characterized in that said at least one feeding line (1) is disposed transversely at 90° with respect to said conveyors (6, 6') which are driven intermittently in the product (P) loading stage.

7. An apparatus according to any one of the previous claims, characterized in that a plurality of transverse feeding lines (1) is provided, which supply an equal number of conveyors disposed side by side (T).

8. An apparatus according to any one of the claims from 1 to 5, characterized in that said feed conveyor (1) is disposed in line with said conveyor (T).

9. An apparatus according to any one of the claims from 1 to 5, characterized in that said feed conveyor (1) is disposed at 90° to and upstream of said conveyor (T), feeding evenly spaced products (P) to a deflector (20) that moves in line and in time with the movement of the conveyors (6, 6'), inserting the products (P) into the cells (5, 5') with a continuous motion.

10. An apparatus acccording to any one of the claims from 1 to 5, characterized in that said feed conveyor (1) is placed below said conveyor (T) and feeds the products (P) to the lower branches of the conveyors (6, 6').
